# EUROPEAN PATENT SPECIFICATION

(11) **EP 1 211 446 B1**
(45) Date of publication and mention of the grant of the patent: **11.01.2006**
(21) Application number: 01870258.9
(22) Date of filing: 22.11.2001
(51) Int. Cl.: F16K 11/085, F16K 11/20

(54) **Distributor**
Verteiler
Distributeur

(43) Date of publication of application: 05.06.2002
(73) Proprietor: Rubinetterie Zipponi di Nember Oscar, 25050 Rodengo Saiano (Brescia) (IT)
(72) Inventor: Nember, Oscar, 25050 Rodengo Saiano, Brescia (IT)
(74) Representative: Bontardelli, Ugo

(56) References cited:
- DE-A- 2 205 486
- DE-A- 2 207 927
- DE-A- 2 536 569
- FR-A- 739 519
- US-A- 3 957 081

## Description

### The field of the invention

This invention concerns the general taps and fittings sector and refers especially to a multi-way distributor for plumbing systems.

### State of the art

Multi-way hydraulic deviators to selectively distribute a water inlet flow to several outlets through a rotating distributor component have already been proposed.

For example, the document DE-A-25 36 569 discloses a hydraulic, multi-way distributor which comprises a body with a water inlet passage and several water outlet ways and a deviator device rotatably fitted in the said body and having an axial hole communicating with the water inlet passage and a lateral opening designed to be positioned far away from or fully or partially in line with at least one of the said outlet ways, following rotation of the deviator device to intercept the inlet water flow and to selectively distribute it towards the said uses. If said distributor is provided with a valve device, this move axially in the distributor.

The document FR-A-739 519 discloses an assembly which includes a valve unit and a distributor unit for taps where,however, the two units are configured and associated so as to be controlled by a single knob and only when the valve has reached a certain position when opening.

In turn, the document DE-A-2205486, discloses a tap-distributor which has two controls means, respectively to open and close the inlet of water and for the distribution of the water towards the outlets, but where the opening and closing system requires the axial movement of a stopper.

The document DE-A-2207927 corresponding to the preamble of claim 1, discloses a tap for a water heater which also operates in an axial mode by means of a push and pull rod with a single knob which acts also a means for controlling the distribution of the water towards the outlets.

To be noted that in each above cited document, the water inlet passage is axial and in particular in DE-A-2205486 and DE-A-2207927 the inlet tube is positioned and fixed to the of the tap and does not use its external surface to canalise the water towards the outlets. The top part of the tube where present and which protrudes into the mixing chamber is envisaged principally to interact only with the closing element.

### Purpose of the invention

The purpose of this invention is to supply a multi-way hydraulic distributor in a new and simpler conformation with fewer pieces; one which is more economical to make, of certain functionality, and reliable.

This purpose is achieved with a multi-way hydraulic distributor according to the characterising part of claim 1.

### Description of the invention

Further details of the invention will prove more obvious by going through a description making reference to the enclosed, indicative and non-limiting enclosures, in which:
Fig. 1 shows the axial section of a multi-way distributor according to the finding; and
Fig. 2 shows a schematic aerial view of the distributor in Fig. 1.

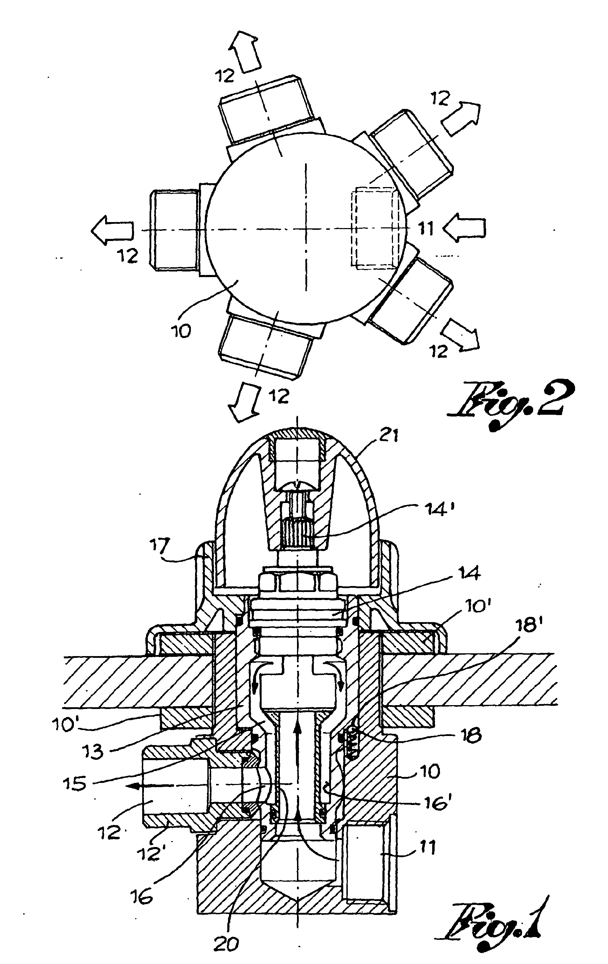

The distributor illustrated, includes a body 10, in which the following have been made: an inlet passage 11 and several water passages 12 at a different level, each with a 12' fitting for connection to a respective use. The body has one extemal threaded part, provided with two nuts 10' to fit the distributor to a surface or support wall.

Inside the body 10, the following are housed: a sealed deviation device 13 to direct the incoming water flow towards each of the outlet ways 12; a valve type device 14, inserted coaxially inside the deviator 13 for partially or totally opening and closing the water inlet passage 11.

The deviator device 13 has a hollow body, with an axial hole 16' and a lateral opening 16 executed at the level of the oudet ways 12. This device is susceptible to rotation around its geometric axis to place lateral opening 16 in line with at least one outlet way, excluding the remaining ones. As it rotates, deviator 13 presents a head portion protruding from the body 10 of the distributor, coupled with a manoeuvre knob 17. In order to obtain the easy and correct positioning of the lateral opening 16 with respect to each of the outlet ways 12, in body 10 of the distributor, a stop ball 18, driven by spring 19 is foreseen. This stop ball engages the cavities 18' made in the deviator device 13, in line with each outlet way.

The valve type device 14 is connected to and communicates with the water inlet passage 11, through a channel conduit 20, located in axis with the valve type device and coaxial to the deviator. This conduit 20 extends towards the valve type device 14, starting from the opening of the deviator 13, directed towards inlet 11. At the outlet, the valve type device communicates with an annular channel 15 that arrives at the lateral opening 16 of the deviator. This channel is delimited by deviator 13 at the outside, with the valve type device 14 and the conduit 20 at the inside, so that the water entry passage 11 never directly communicates with any outlet way 12. The valve type device 14 can be of the mother screw type with ceramic plates or have other means to partially or totally close and open the water inlet 11. To be operated, the valve type device 14 has a head fitting 14, protruding from the body 10 that can be coupled with a second knob 21.

In practice, the desired amount of inlet water passes through the conduit 20 and the valve type device 14, and from here it is deviated towards an outlet way, through lateral opening 16 in the deviator device 13.

It should be noticed that this lateral opening 16 may also be partially lined up with two oudet ways 12, to distribute the water towards two uses at the same time.

It should also be noted that that the distributor could also be without valve type device 14. In this case, the deviator acts as a shutter when its lateral opening 16 is located far from outlet ways 12 and perhaps equipped with a distributor body seal gasket.

## Claims

1. A hydraulic, multi-way distributor comprising:
a body (10) with a water inlet passage (11) and several water outlet ways (12) each for a different use;
a deviator device (13) rotatably fitted in said body and provided with an axial hole (16') communicating with the water inlet passage and a lateral opening (16) to be disposed away from or fully or partially in line with at least one of said outlet ways (12) upon rotation of the deviator device to intercept the inlet flow of water and to distribute water flow towards the uses selectively;
a valve device (14) associated with said deviator device (13) for the partial or total opening or closing of the water inlet passage; **characterized in that**:
- the water inlet passage (11) is located in said body radially,
- an axial connection conduit (20) extends within the axial hole (16') of said deviator device and provides an interior passage, which connects said radial water inlet passage (11) to said valve device (14) and cooperates with said deviator device to define an annular water transit channel (15) between said conduit and said deviator device from said valve device to the lateral opening (16) of said deviator device, said valve device communicates at an entry side with said axial conduit (20) and on an exit side with said annular water transit channel (15) towards said lateral opening (16) of the water flow deviator, for supplying water selectively to the outlet ways, and
a first rotating control knob (21) is connected to said valve device (14) for controlling the water flow from said water inlet passage to said lateral opening; and a second rotating control knob (17) is connected to said deviator device (13) for controlling the rotational position of the deviator to control water flow from said water inlet passage to each of said several water outlet ways.

## Patentansprüche

1. Ein Mehrweg-Hydraulikverteiler enthält folgendes:
einen Körper (10) mit einem Durchgang (11) für den Wassereinlauf und mehrere Auslaufswege (12) für das Wasser, jeder für einen anderen Gebrauch;
einen rotierend montierten Abweiser (13) in diesem Körper und mit einer mittigen Bohrung (16'), die mit dem Durchgang für den Wassereinlauf und einer seitlichen Öffnung (16) verbunden ist, die dazu bestimmt ist entfernt von mindestens einem dieser Auslaufswege (12) oder ganz oder teilweise übereinstimmend damit, angebracht zu werden, nach der Drehung des Abweisers zur Absperrung des einlaufenden Wasserstroms und zur wahlweisen Verteilung des Wasserstroms zu den genannten Anwendungen;
eine diesem Abweiser (13) zugeordnete Ventilvorrichtung (14) für eine teilweise oder vollständige Öffnung oder Schließung des Wassereinlauf-Durchgangs, **dadurch gekennzeichnet**:
- der Wassereinlauf-Durchgang (11) ist radial in diesem Körper angebracht;
- eine mittige Verbindungsleitung (20) erstreckt sich im Innern der mittigen Öffnung (16') dieses Abweisers und legt einen internen Durchgang fest, der diesen radialen Durchgang (11) des Wassereinlaufs mit dieser Ventilvorrichtung (14) verbindet und mit diesem Abweiser zusammenwirkt, um einen ringförmigen Kanal (15) für den Wasserdurchfluss zwischen der genannten Leitung und dem genannten Abweiser zu der genannten Ventilvorrichtung an der seitlichen Öffnung (16) dieses Abweisers zu bauen;
- die genannte Ventilvorrichtung ist am Eingang mit der genannten mittigen Leitung (20) und am Auslauf mit dem genannten ringförmigen Kanal (15) zum Wasserdurchfluss zu der genannten seitlichen Öffnung des Wasserstromabweisers verbunden, um das Wasser wahlweise an die Auslaufswege zu verteilen; und
- ein erster Drehknopf zur Bedienung (21) ist mit der genannten Ventilvorrichtung (14) verbunden, um den Wasserstrom von diesem Wassereinlaufs-Durchgang zu der genannten seitlichen Öffnung zu steuern, und ein zweiter Drehknopf zur Bedienung (17) ist mit dem genannten Abweiser (13) verbunden, um die Winkelposition des Abweisers zu steuern, um den Wasserstrom von diesem Wassereinlaufs-Durchgang zu jedem dieser verschiedenen Wasseraustrittswege zu steuern.

## Revendications

1. Un distributeur hydraulique à plusieurs voies comprenant :
un corps (10) avec un passage d'entrée (11) de l'eau et plusieurs voies (12) de sortie de l'eau, chacune pour une utilisation différente ;
un dispositif déviateur (13) monté en rotation sur ledit corps et présentant un trou axial (16') en communication avec le passage d'entrée de l'eau et une ouverture latérale (16) destinée à être placée loin, ou bien en correspondance totale ou partielle avec une des voies de sortie (12) suite à la rotation du dispositif déviateur pour intercepter le flux d'eau entrant et distribuer le débit d'eau de façon sélective vers les différents points d'utilisation ;
un dispositif valvulaire (14) associé à ce dispositif déviateur (13) pour l'ouverture ou la fermeture partielle ou totale du passage d'entrée de l'eau ; **caractérisé en ce que** :
- le passage d'entrée (11) de l'eau est placé en position radiale dans le corps,
- un conduit axial (20) d'union s'étend à l'intérieur du trou axial (16') du dispositif déviateur et définit un passage intérieur qui relie le passage (11) radial d'entrée de l'eau au dispositif valvulaire (14) et coopère avec le dispositif déviateur pour construire un canal annulaire (15) de circulation de l'eau entre le conduit et le dispositif déviateur, du dispositif valvulaire à l'ouverture latérale (16) du dispositif déviateur,
- le dispositif valvulaire communique à l'entrée avec le conduit axial (20) et à la sortie avec le canal annulaire (15) de circulation de l'eau vers l'ouverture latérale (16) du déviateur du flux d'eau, afin de distribuer l'eau aux voies de sortie de façon sélective, et
- une première poignée tournante de manoeuvre (21) est reliée au dispositif valvulaire (14) pour contrôler l'écoulement de l'eau du passage d'entrée de l'eau à l'ouverture latérale, et une deuxième poignée tournante de manoeuvre (17) est reliée au dispositif déviateur (13) pour contrôler la position angulaire du déviateur afin de contrôler l'écoulement d'eau du passage d'entrée de l'eau à chacune des différentes voies de sortie de l'eau.
